# EUROPÄISCHE PATENTSCHRIFT

(11) **EP 1 439 324 B1**
(45) Veröffentlichungstag und Bekanntmachung des Hinweises auf die Patenterteilung: **27.12.2006**
(21) Anmeldenummer: 04100039.9
(22) Anmeldetag: 08.01.2004
(51) Int. Cl.: F16H 3/72, F16H 1/28, E01C 19/28

(54) **Kompaktantrieb für Walzenzüge**
Compact transmission for tractor-compactor train
Transmission compacte pour ensemble tracteur-compacteur

(30) Priorität: 16.01.2003 DE 10301576
(43) Veröffentlichungstag der Anmeldung: 21.07.2004
(73) Patentinhaber: LOHMANN & STOLTERFOHT GMBH, 58455 Witten (DE)
(72) Erfinder: Damm, Horst, 45549 Sprokhövel (DE); Jakubowski, Karl-Heinz, 44581 Castrop-Rauxel (DE); Matalla, Manuel, 58453 Witten (DE)
(74) Vertreter: Kietzmann, Lutz

(56) Entgegenhaltungen:
- DE-A1- 10 217 343
- DE-A1- 19 801 030
- US-A- 4 132 134
- US-A- 4 392 396
- US-A- 4 568 218

## Beschreibung

Die vorliegende Erfindung betrifft einen Kompaktantrieb für einen Walzenzug, mit einem Antriebsmotor, der an einem Gehäuse eines Reduktionsgetriebes angeflanscht ist, das eine Reduktion der Drehzahl mittels eines Stirnradgetriebes vornimmt, das aus einem an den Antriebsmotor angeschlossenen Ritzel und einem Stirnrad besteht, das auf einer achsparallel beabstandet zur Welle des Antriebsmotors angeordneten Hohlwelle als zentraler Getriebedurchgang verläuft, wobei abtriebseitig des als Getriebevorstufe dienenden Stirnradgetriebes ein ortsfest, koaxial zum Stirnrad angeordnetes weiteres Ritzel vorgesehen ist.

Ein derartiger Kompaktantrieb kommt beispielsweise als Antriebseinheit eines Walzenzuges für den Straßenbau zum Einsatz. Diese Baumaschine besteht im wesentlichen aus einem Fahrzeugrahmen mit Fahrerkabine und je einer Walze, die am vorderen und hinteren Ende des Fahrzeugrahmens angebracht ist. Der Walzenzug der hier interessierenden Art ist mit Vibrationswalzen ausgestattet. Bei einer Vibrationswalze ist die Drehbewegung für das normale Fahren überlagert mit einer oszillierenden Bewegung bezüglich der Fahrbahn. Hierdurch erfolgt eine wirkungsvolle Verdichtung der aufzubauenden Fahrbahn, so dass Asphalt oder andere Fahrbahnbeläge effizient aufgebracht werden können.

In allgemein bekannter Weise wird jede Walze des Walzenzuges mit einem separaten Antrieb bestückt. Hierbei kommt gewöhnlich ein langsamlaufender Motor zum Einsatz, welcher direkt den Fahrantrieb der Vibrationswalze bildet, wobei eine Zusatzwelle eine innerhalb der Vibrationswalze angeordnete Vibrationseinrichtung antreibt. Als langsamlaufender Motor wird üblicherweise ein hydraulischer Radialkolbenmotor eingesetzt. Mit dem langsamlaufenden Motor ist jedoch nur eine begrenzte Fahrdynamik und Fahrleistung möglich, so dass der bekannte Antrieb heutigen Anforderungen in der Straßentechnik nicht mehr ausreichend entspricht.

Der naheliegende Gedanke, an Stelle eines langsamlaufenden Motors einen schnelllaufenden Motor, beispielsweise einen Axialkolbenmotor, zu verwenden und diesen mit einem Reduktionsgetriebe entsprechend zu untersetzen, stößt bei der technischen Realisierung an Grenzen, die insbesondere durch die getriebeschädigende Zusatzbelastung, aufgrund der Vibrationseinrichtung sowie einer möglichst kompakten Bauform des gesamten Antriebes vorgegeben sind.

Aus der gattungsgemäßen DE 102 17 343 A1 geht ein Reduktionsgetriebe hervor, dass gemeinsam mit einem Antriebsmotor eine kompakte Antriebseinheit bildet. Der Antriebsmotor ist achsparallel zur Hauptachse des Getriebes angeflanscht. Eine Reduktion der Drehzahl erfolgt hier mittels eines Stirnradgetriebes. Das Stirnradgetriebe wird aus einem an dem Antriebsmotor angeordneten Ritzel gebildet, das in ein großes Stirnrad zum Eingriff kommt. Das große Stirnrad ist auf einer achsparallel beabstandet zur Welle des Antriebsmotors angeordneten Hohlwelle drehend gelagert. Die Hohlwelle dient hier als ein zentraler Getriebedurchgang zur Durchführung von Leitungen, Rohren oder ähnlichem. Neben dem großen Stirnrad ist mit diesem ortsfest ein weiteres Ritzel verbunden. Dieses Ritzel bildet den Abtrieb des insoweit als Getriebevorstufe dienenden Stirnradgetriebes.

Nachgeschaltet ist hier eine Exenter-Schwingeinheit, bei welcher zwei benachbart zueinander angeordnete Außenräder eine Exenterbewegung ausführen. Es ist möglich, mindestens zwei oder mehr Arten von Reduktionsverhältnissen, hier durch Änderung des Außendurchmessers des großen Stirnrades sowie des Ritzels zu realisieren. Zu diesem Zweck ist das große Stirnrad abnehmbar mittels Schrauben angebracht und somit leicht austauschbar.

Allerdings ist das mit diesem Reduktionsgetriebe mögliche Reduktionsverhältnis begrenzt. Das Reduktionsverhältnis wird hier allein von der Stirnradstufe bestimmt. Bei besonderen Einsatzfällen - beispielsweise im Zusammenhang mit dem Antrieb von Vibrationswalzen - lässt sich dieses Reduktionsgetriebe des Standes der Technik daher nicht in Verbindung mit einem schnelllaufenden Motor (Axialkolbenmotor) einsetzen. Eine weitere Vergrößerung des Reduktionsverhältnisses beim bekannten Reduktionsgetriebe würde wegen der erforderlichen zusätzlichen Stirnradstufen zu einer Vergrößerung der Abmessungen des Antriebs führen.

Wegen des begrenzten Bauraums für das Reduktionsgetriebe samt Antriebsmotor für einen Walzenantrieb ist eine Vergrößerung der Abmessungen des Antriebs jedoch nicht möglich.

Es ist daher die Aufgabe der vorliegenden Erfindung einen Antrieb für eine Walze, eines Walzenzuges, insbesondere für eine Vibrationswalze, bereitzustellen, der sich einerseits durch eine sehr kompakte Bauform auszeichnet und der andererseits als Antrieb in Verbindung mit einem schnelllaufenden Motor geeignet ist.

Die Aufgabe wird ausgehend von einem Kompaktantrieb, gemäß dem Oberbegriff des Anspruchs 1, in Verbindung mit dessen kennzeichnenden Merkmalen gelöst. Hinsichtlich eines Walzenzuges mit Vibrationswalze wird die Aufgabe durch die Merkmale des Anspruchs 10 gelöst. Die jeweils rückbezogenen abhängigen Ansprüche geben vorteilhafte Weiterbildungen der Erfindung an.

Die Erfindung schließt die technische Lehre ein, dass das ausgangsseitig der Getriebevorstufe vorgesehene Ritzel direkt ein Sonnenrad einer nachgeschalteten Planetengetriebestufe bildet, deren Hohlrad ortsfest zum Gehäuse angeordnet ist und deren die Planetenträger haltender Planetenträger Bestandteil des Abtriebsflansches des Reduktionsgetriebes ist.

Der erfindungsgemäße Kompaktantrieb ist damit in vorteilhafter Weise in Verbindung mit einem schnelllaufenden Antriebsmotor einsetzbar, wobei gleichzeitig die speziellen Platzverhältnisse beim Einsatz als Kompaktantrieb für einen Walzenzug berücksichtigt werden. Gleichwohl ist der erfindungsgemäße Kompaktantrieb nicht allein auf diesen Einsatzfall beschränkt. Die Kompaktheit des Antriebes wird durch die direkte, funktionsintegrierte Kopplung des ausgangsseitigen Ritzels der Getriebevorstufe mit der nachgeschalteten Planetengetriebestufe erzielt.

Gemäß einer die Erfindung verbessernden Maßnahme ist vorgesehen, dass an der Motorenseite des Reduktionsgetriebes neben dem schnelllaufenden Antriebsmotor ein Zusatzmotor anflanschbar ist. Die Voraussetzung hierfür bietet der durch das Reduktionsgetriebe verlaufende zentrale Getriebedurchgang, durch welchen die Abtriebswelle des Zusatzmotors achsparallel zum Antriebsmotor hindurch verläuft. Diese nebeneinander Anordnung zweier Motoren ist, insbesondere bei dem speziellen Einsatzfall des Antriebes für einen Walzenzug, von Vorteil. Mit dem Antriebsmotor wird nämlich in Zusammenwirken mit dem Reduktionsgetriebe ein dynamischer leistungsfähiger Fahrantrieb für eine Vibrationswalze geschaffen, wogegen der Zusatzmotor dem separaten Antrieb der in der Vibrationswalze integrierten Vibrationseinrichtung dient. Insgesamt entsteht eine sehr kompakte Anordnung, welche durch die Separierung des Antriebsstrangs verbesserte Betriebseigenschaften liefert.

Eine weitere die Erfindung hinsichtlich der Kompaktheit verbessernde Maßnahme besteht in der speziellen Formgebung des Stirnrades der Getriebevorstufe. Dieses Stirnrad ist tellerförmig ausgebildet und im Gehäuse über ein Wälzlager drehend gelagert, derart, dass das Wälzlager mit der Verzahnung des Stirnrades fluchtet und der sich weiter nach Radialinnen erstreckende Bereich des Stirnrades versetzt neben dem Wälzlager verläuft und in einer innenradialen Verzahnung des Stirnrades mündet. Hierin ist das Sonnenrad der nachfolgenden Planetenge triebestufe eingesteckt, um das Drehmoment von der Getriebevorstufe auf die nachgeschaltete Planetengetriebestufe direkt zu übertragen.

Die Kompaktheit des erfindungsgemäßen Reduktionsgetriebes wird auch dadurch gesteigert, das der die Planetenräder der Planetengetriebestufe tragende Planetenträger als ein Schmiedeteil ausgebildet ist, das gleichzeitig auch den Abtriebsflansch des Reduktionsgetriebes bildet. Somit sind sowohl Planetenträger als auch Abtriebsflansch in ein einziges Bauteil funktionsintegriert. Zur Aufnahme der den funktionsintegrierten Planetenträger belastenden radialen und axialen Kräfte ist eine im Mittelbereich des Planetenträgers angeordnete Kegelrollenlagerung vorgesehen. Durch die gedrungene Gestalt des Planetenträgers sind weitere abtriebsseitige Lagerstellen entbehrlich.

Gemäß einer anderen die Erfindung verbessernden Maßnahme ist in den zentralen Durchbruch des Planetenträgers eine Dichtungsbuchse fest eingesteckt, die sich durch das Sonnenrad der Planetengetriebestufe hindurch zur Motorseite des Reduktionsgetriebes erstreckt. Diese durchgängige Dichtungsbuchse ist auf der Motorseite radial gegenüber dem Gehäuse abgedichtet und bildet neben der Dichtung auch den zentralen Getriebedurchgang durch das Reduktionsgetriebe.

Vorzugsweise ist das Gehäuse des Reduktionsgetriebes im Wesentlichen zweiteilig aufgebaut, wobei ein Gehäusehauptteil sowie ein Gehäusedeckelteil vorgesehen ist. Das Gehäusehauptteil dient der Unterbringung der Getriebevorstufe und der nachgeschalteten Planetengetriebestufe. Das Gehäusedeckelteil dient zum Verschließen des Gehäusehauptteils auf der Motorenseite des Reduktionsgetriebes. Durch diese Anordnung ist eine Wartung oder Reparatur des Reduktionsgetriebes möglich, ohne dieses komplett zu demontieren. Es ist lediglich erforderlich, den Antriebsmotor und ggf. den Zusatzmotor zu entfernen, wonach das Gehäusedeckelteil zugänglich ist.

Insbesondere bei Einsatz des Kompaktantriebes zum Antrieb eines mit Vibrationswalzen ausgerüsteten Walzenzuges ist vorgesehen, dass das antriebsmotorseitige Ritzel des Reduktionsgetriebes auf einer gemeinsamen Welle mit einer Bremse angeordnet ist. Die Bremse erfüllt zum einen eine Haltefunktion für den Walzenzug und dient zum anderen auch als Stellglied einer Schlupfregelung zum Synchronisieren des separaten Drehantriebes beider Vibrationswalzen des Walzenzuges. Vorzugsweise ist die Bremse nach Art einer Lamellenbremse ausgebildet. Diese lässt sich vorteilhafterweise gegenüberliegend am Antriebsmotor im Gehäuse des Reduktionsgetriebes integrieren. Um eine Zugänglichkeit der Bremse im Wartungs- oder Reparaturfall zu gewährleisten, ist am Gehäuse eine entsprechend lösbar gehaltene Bremsenkappe vorgesehen.

Weiter die Erfindung verbessernde Maßnahmen gehen aus den abhängigen Ansprüchen hervor bzw. werden nachstehend gemeinsam mit der Beschreibung eines bevorzugten Ausführungsbeispiels der Erfindung, anhand der Figuren näher dargestellt. Es zeigt:
- Figur 1: eine schematische Darstellung eines Kompaktantriebes in Form eines Getriebeschaubildes, und
- Figur 2: einen Längsschnitt durch eine konstruktive Ausführung eines Kompaktantriebes mit der Funktion gemäß Figur 1.

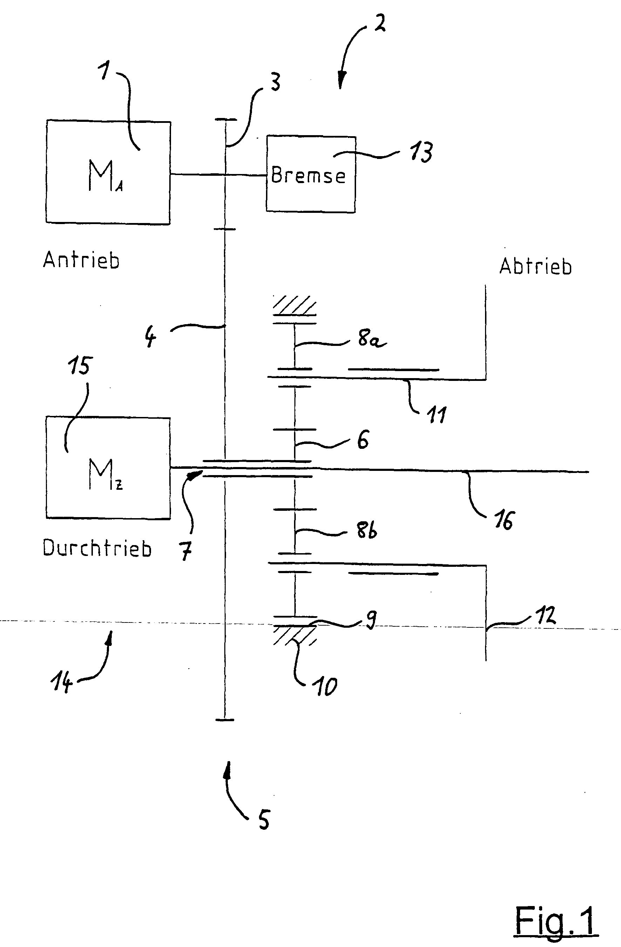

Der Kompaktantrieb gemäß Figur 1 besteht aus einem Antriebsmotor 1, der hier als hydraulischer Axialkolbenmotor ausgebildet ist und mit einem Reduktionsgetriebe 2 in Verbindung steht. Das Reduktionsgetriebe 2 weist ein mit dem Antriebsmotor 1 verbundenes Ritzel 3 auf, welches mit einem Stirnrad 4 und der Bildung eines Stirnradgetriebes 5 kämmt. Das Stirnradgetriebe 5 bildet hier eine drehzahlreduzierende Getriebevorstufe und weist abtriebsseitig ein weiteres Ritzel auf, welches als Sonnenrad 6 Bestandteil einer nachgeschalteten Planetengetriebestufe ist. Die koaxial ortsfest zueinander bestehende Paarung des Stirnrades 4 mit dem Sonnenrad 6 bildet eine Art Hohlwelle, die hier als Getriebedurchgang 7 genutzt wird.

Das Sonnenrad 6 der Planetengetriebestufe kämmt mit mehreren Planetenrädern 8a, 8b, welche sich wiederum in einem Hohlrad 9 abrollen. Das Hohlrad 9 ist ortsfest gegenüber einem Gehäuse 10 des Reduktionsgetriebes 2 angeordnet. Die mehreren Planetenräder 8a, 8b sind an einem Planetenträger 11 gehalten, der in einen Abtriebsflansch 12 des Reduktionsgetriebes 2 übergeht. Ferner ist eine Bremse 13 direkt antriebsseitig des Reduktionsgetriebes 2 wellengleich zum Ritzel 3 angeordnet.

Seitens der gemeinsamen Motorenseite 14 des Reduktionsgetriebes 2 ist ein Zusatzmotor 15 achsparallel neben dem Antriebsmotor 1 vorgesehen. Eine Abtriebswelle 16 des Zusatzmotors 15 verläuft durch den zentralen Getriebedurchgang 7 des Reduktionsgetriebes 2 hindurch.

Bei einem Einsatz des vorstehend prinzipiell beschriebenen Kompaktantriebs bei einem Walzenzug dient der Antriebsmotor 1 als Fahrantrieb einer - nicht weiter gezeigten - Vibrationswalze wo gegen der Zusatzmotor 15 für den Antrieb der Vibrationseinrichtung der Vibrationswalze vorgesehen ist.

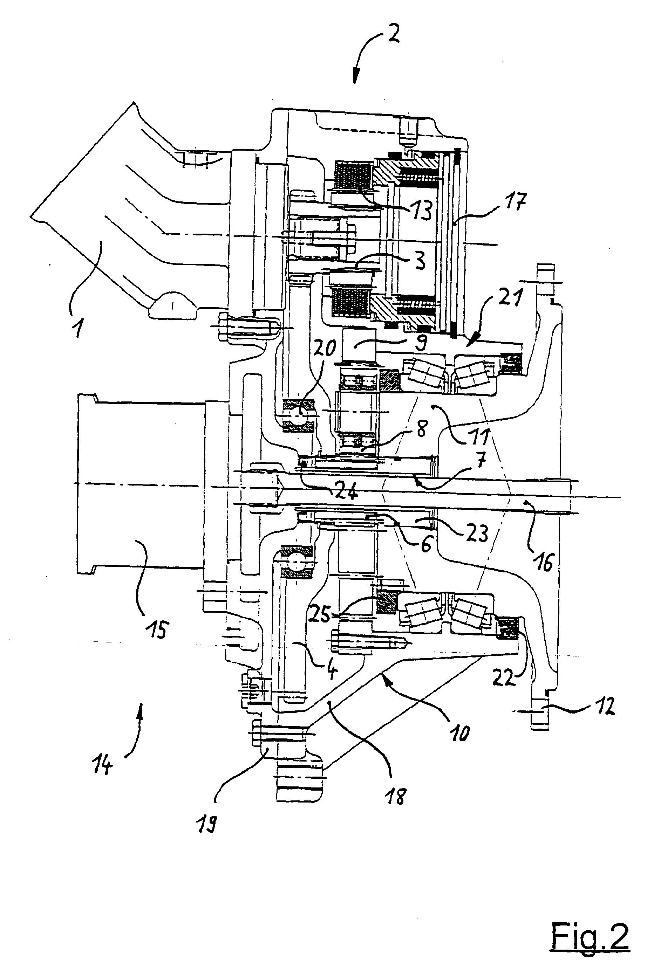

Wie aus der Figur 2 im Detail hervorgeht, ist der Antriebsmotor 1 als hydraulischer Axialkolbenmotor ausgebildet; für den Zusatzmotor 15 ist ebenfalls ein hydraulischer Axialkolbenmotor vorgesehen. Der Antriebsmotor 1 ist an dem Gehäuse 10 des Reduktionsgetriebes 2 angeflanscht. Die Welle des Antriebsmotors 1 wirkt direkt mit dem Ritzel 3 zusammen. Mit dem Ritzel 3 wirkt ebenfalls die Bremse 13 zusammen, welche als Lamellenbremse ausgebildet ist. Die Bremse 13 ist gegenüberliegend dem Antriebsmotor 1 im Gehäuse 10 integriert und über eine lösbar im Gehäuse 10 vorgesehene Bremsenkappe 17, für Wartungs- und Reparaturarbeiten zugänglich.

Das Gehäuse 10 ist im Prinzip zweiteilig aufgebaut und besteht aus einem Gehäusehauptteil 18 sowie einem Gehäusedeckelteil 19. Der Antriebsmotor 1 sowie der Zusatzmotor 15 sind am Gehäusedeckelteil 19 angeflanscht. Dagegen dient das Gehäusehauptteil 18 zur Unterbringung des Reduktionsgetriebes 2. Die Getriebevorstufe des Reduktionsgetriebes 2 wird aus dem Ritzel 3 und dem Stirnrad 4 gebildet. Das Stirnrad 4 weist eine tellerförmige Gestalt auf und ist im Gehäuse 10 drehend über ein Wälzlager 20 gelagert. Das Wälzlager 20 fluchtet mit der außenradialen Verzahnung des Stirnrades 4, wogegen der innenradiale Bereich des Stirnrades 4 versetzt neben dem Lager 20 verläuft.

Das Sonnenrad 6 der nachgeschalteten Planetengetriebestufe ist in eine korrespondierende innenradiale Verzahnung im Stirnrad 4 eingesteckt. Das Sonnenrad 6 überträgt somit das von der Getriebevorstufe ausgangsseitig erzeugte Drehmoment auf die nachgeschaltete Planetengetriebestufe. Das Sonnenrad 6 ist zylinderartig ausgebildet, um den zentralen Getriebedurchgang 7 zu schaffen. Das sich selbst zentrierende Sonnenrad 6 korrespondiert mit den mehreren Planetenrädern 8 (als exemplarisches Beispiel). Das Hohlrad 9 der Planetengetriebestufe ist ortsfest mit dem Gehäuse 10 verschraubt. Sämtliche Planetenräder 8 werden von dem als Schmiedeteil ausgeführten Planetenträgern 11 gehalten, der abtriebsseitig auch gleichzeitig den Abtriebsflansch 12 bildet und insoweit einstückig ist. Über eine Kegelrollenlagerung 21 ist der Planetenträger 11 gegenüber dem Gehäuse 10 drehend gelagert. Die Kegelrollenlagerung 21 ist mittels einer auf den Planententräger 11 aufschraubbaren Wellenmutter 25 vorspannbar. Zur Abdichtung des Planetenträgers 11 gegenüber dem Gehäuse 10 ist eine schmutzunempfindliche Kassettendichtung 22 vorgesehen. In den zentralen Durchbruch des Planetenträgers 11 ist eine Dichtungsbuchse 23 eingesteckt, die sich mit dem Planetenträger 11 mitdreht. Die Dichtungsbuchse 23 ist ebenfalls durch das Sonnenrad 6 der Planetengetriebestufe unter Spiel hindurchgeführt und tritt an der Motorenseite 14 des Reduktionsgetriebes 2 hervor. An dieser Stelle ist die Dichtungsbuchse 23 über eine Radiallippendichtung 24 gegenüber dem Gehäuse 10 abgedichtet. Die Dichtungsbuchse 23 bildet somit den zentralen Getriebedurchgang 7 für die Abtriebswelle 16 des Zusatzmotors 15.

Der erfindungsgemäße Kompaktantrieb mit zwei unabhängig voneinander arbeitenden und nebeneinander angeordneten Motoren eignet sich besonders wegen seiner Bauform sowie des Antriebskonzeptes zum Antrieb von Vibrationswalzen eines Walzenzuges, wobei der Antriebsmotor 1 als Fahrantrieb der Vibrationswalze und der Zusatzmotor 15 als Antrieb der integrierten Vibrationseinrichtung dient.

### Bezugszeichenliste

- **1**: Antriebsmotor
- **2**: Reduktionsgetriebe
- **3**: Ritzel
- **4**: Stirnrad
- **5**: Stirnradgetriebe
- **6**: Sonnerad
- **7**: Getriebedurchgang
- **8**: Planetenräder
- **9**: Hohlrad
- **10**: Gehäuse
- **11**: Planetenträger
- **12**: Abtriebsflansch
- **13**: Bremse
- **14**: Motorenseite
- **15**: Zusatzmotor
- **16**: Abtriebswelle
- **17**: Gehäusekappe
- **18**: Gehäusehauptteil
- **19**: Gehäusedeckelteil
- **20**: Wälzlager
- **21**: Kegelrollenlagerung
- **22**: Kassettendichtung
- **23**: Dichtungsbuchse
- **24**: Radiallippendichtung
- **25**: Wellenmutter

## Patentansprüche

1. Kompaktantrieb für einen Walzenzug mit einem Antriebsmotor (1), der an einem Gehäuse (10) eines Reduktionsgetriebes (2) angeflanscht ist, das eine Reduktion der Drehzahl mittels eines Stirnradgetriebes (5) vornimmt, das aus einem an dem Antriebsmotor (1) angeschlossenen Ritzel (3) und einem Stirnrad (4) besteht, das auf einer achsparallel beabstandet zur Welle des Antriebsmotors (1) angeordneten Hohlwelle als zentraler Getriebedurchgang verläuft, wobei abtriebsseitig des als Getriebevorstufe dienenden Stirnradgetriebes (5) ein ortsfest koaxial zum Stirnrad (4) angeordnetes weiteres Ritzel vorgesehen ist,
**dadurch gekennzeichnet, dass** das weitere Ritzel ein Sonnerad (6) einer nachgeschalteten Planetengetriebestufe bildet, deren Hohlrad (9) ortsfest zum Gehäuse (10) angeordnet ist und deren die Planetenträger (8) haltender Planetenträger (11) Bestandteil des Abtriebsflansches (12) des Reduktionsgetriebes (2) ist, und dass an einer Motorenseite (14) des Reduktionsgetriebes (2) neben dem als Fahrantrieb für eine Vibrationswalze dienenden Antriebsmotor (1) ein Zusatzmotor (15) für den Antrieb einer Vibrationseinrichtung angeflanscht ist, dessen Abtriebswelle (16) achsparallel durch den zentralen Getriebedurchgang (7) hindurch verläuft.

2. Kompaktantrieb nach Anspruch 1,
**dadurch gekennzeichnet, dass** das Stirnrad (4) der Getriebevorstufe des Reduktionsgetriebes (2) tellerförmig ausgebildet ist und im Gehäuse (10) drehend über ein Wälzlager (20) gelagert ist, das mit der Verzahnung des Stirnrades (4) fluchtet, wobei der innenradiale Bereich des Stirnrades (4) versetzt neben dem Wälzlager (20) verläuft.

3. Kompaktantrieb nach Anspruch 1,
**dadurch gekennzeichnet, dass** der Planetenträger (11) als Schmiedeteil einstückig mit dem Abtriebsflansch (12) ausgebildet ist.

4. Kompaktantrieb nach Anspruch 3,
**dadurch gekennzeichnet, dass** der Planetenträger (11) zur Aufnahme radialer und axialer Kräfte über eine Kegelrollenlagerung (21) drehend im Gehäuse (10) gelagert ist.

5. Kompaktantrieb nach Anspruch 4,
**dadurch gekennzeichnet, dass** die auf den Planetenträger (11) angeordnete Kegelrollenlagerung (21) mittels einer koaxial auf den Planetenträger (11) aufschraubbare Wellenmutter (25) vorspannbar ist.

6. Kompaktantrieb nach Anspruch 1,
**dadurch gekennzeichnet, dass** das Sonnenrad (6) in eine korrespondierende innenradiale Verzahnung im Stirnrad (4) eingesteckt ist, um das Drehmoment von der Getriebevorstufe auf die nachgeschaltete Planetengetriebestufe zu übertragen.

7. Kompaktantrieb nach Anspruch 1,
**dadurch gekennzeichnet, dass** in den zentralen Durchbruch des Planetenträgers (11) eine Dichtungsbuchse (23) fest eingesteckt ist, die durch das Sonnenrad (6) der Planetengetriebestufe hindurch zur Motorseite (14) des Reduktionsgetriebes (2) führt, um den zentralen Getriebedurchgang (7) zu bilden.

8. Kompaktantrieb nach einem der vorstehenden Ansprüche,
**dadurch gekennzeichnet, dass** das Gehäuse (10) zweiteilig aufgebaut ist, wobei ein Gehäusehauptteil (18) zur Unterbringung der Getriebevorstufe und der nachgeschalteten Planetengetriebestufe sowie ein Gehäusedeckelteil (19) zum Verschließen des Gehäusehauptteils (18) auf der Motorenseite (14) des Reduktionsgetriebes (2) vorgesehen ist.

9. Kompaktantrieb nach einem der vorstehenden Ansprüche,
**dadurch gekennzeichnet, dass** der Antriebsmotor (1) und/oder der Zusatzmotor (15) als Hydraulikmotor ausgeführt sind.

10. Walzenzug mit Vibrationswalzen, die je mit einem Kompaktantrieb gemäß einem der vorstehenden Ansprüche ausgestattet sind.

11. Walzenzug nach Anspruch 10,
**dadurch gekennzeichnet, dass** das Ritzel (3) des Reduktionsgetriebes (2) auf einer gemeinsamen Welle mit einer Bremse (13) angeordnet ist, welche neben der Erfüllung einer Haltefunktion auch als Stellglied einer Schlupfregelung zum Synchronisieren des Drehantriebs der Vibrationswalzen dient.

12. Walzenzug nach Anspruch 11,
**dadurch gekennzeichnet, dass** die Bremse (13) nach Art einer Lamellenbremse ausgebildet ist und gegenüberliegend dem Antriebsmotor (1) im Gehäuse (10) integriert ist.

13. Walzenzug nach Anspruch 12,
**dadurch gekennzeichnet, dass** die im Gehäuse (10) integrierte Bremse (13) über eine im Gehäusehauptteil (18) lösbar gehaltene Bremsenkappe (17) zugänglich ist.

## Claims

1. A compact drive for a tractor-compactor train, comprising a drive motor (1) flanged to a housing (10) of a reduction gearbox (2) for reducing the speed by means of spur gears (5) consisting of a pinion gear (3) coupled to the drive motor (1) and a spur gear (4) extending on a hollow shaft, with a parallel axis to and spaced from the shaft of the drive motor (1) and acting as a central transmission passage, wherein a further pinion gear is provided fixed and coaxial with the spur gear on the output side of the spur gears (5) acting as a gearbox pre-stage,
**characterized in that** the further pinion gear acts as a sun gear (6) of a downstream planetary gearbox stage, the ring gear of which (9) is fixed with respect to the housing (10) and wherein its planet carrier (11) carrying the planet carrier (8) is an integral part of the drive flange (12) of the reduction gearbox (2), and **in that**, on the motor side (14) of the reduction gearbox (2), adjacent to the drive motor (1) serving as a drive for a vibrating roller, an auxiliary motor (15) is flanged for driving a vibrating means, the drive shaft (16) of which has its axis extending in parallel through the central transmission passage (7).

2. The compact drive according to claim 1,
**characterized in that** the spur gear (4) of the gearbox pre-stage of the reduction gearbox (2) has a plate-like configuration and is supported in a rotary manner in the housing (10) by means of a rolling bearing (20) aligned with the toothing of the spur gear (4), wherein the radially inner area of the spur gear (4) is laterally offset from the rolling bearing (20).

3. The compact drive according to claim 1,
**characterized in that** the planet carrier (11) is formed as a forged part integral with the drive flange (12).

4. The compact drive according to claim 3,
**characterized in that** the planet carrier (11) is supported by a tapered roller bearing (21) in the housing (10) in a rotary manner to receive radial and axial forces.

5. The compact drive according to claim 4,
**characterized in that** the tapered roller bearing (21) arranged on the planet carrier (11) can be biased by means of a shaft nut able to be screwed coaxially onto the planet carrier (11).

6. The compact drive according to claim 1,
**characterized in that** the sun gear (6) is inserted in a corresponding radially inner toothing in the spur gear (4) to transmit the torque from the gearbox pre-stage to the downstream planetary gearbox stage.

7. The compact drive according to claim 1,
**characterized in that**, in the central passage of the planet carrier (11), a sealing bushing (23) is fixedly inserted, extending through the sun gear (6) of the planetary gearbox stage to the motor side (14) of the reduction gearbox (2) to form the central transmission passage (7).

8. The compact drive according to any one of the preceding claims,
**characterized in that** the housing (10) is formed of two parts, wherein a housing main body (18) is provided for accommodating the gearbox pre-stage and the downstream planetary gearbox stage, and a housing cover (19) is provided for closing off the housing main body (18) on the motor side (14) of the reduction gearbox (2).

9. The compact drive according to any one of the preceding claims,
**characterized in that** the drive motor (1) and/or the auxiliary motor (15) are hydraulic motors.

10. A tractor-compactor train with a vibrating roller, each equipped with a compact drive according to any one of the preceding claims.

11. The tractor-compactor train according to claim 10,
**characterized in that** the pinion gear (3) of the reduction gearbox (2) is arranged on a common shaft together with a brake (13) which, apart from fulfilling its holding function, also serves as an actuator of a slip regulation for synchronising the rotary drive of the vibrating rollers.

12. The tractor-compactor train according to claim 11,
**characterized in that** the brake (13) is formed in the manner of a lamella brake and is integrated in the housing (10) opposite the drive motor (1).

13. The tractor-compactor train according to claim 12,
**characterized in that** the brake (13) integrated in the housing (10) is accessible through a brake flap (17) detachably held in the housing body (18).

## Revendications

1. Transmission compacte pour un ensemble tracteur-compacteur, comprenant un moteur d'entraînement (1) qui est bridé sur un carter (10) d'une transmission à réduction (2) qui exécute une réduction de la vitesse de rotation au moyen d'un groupe à engrenages droits (5), constitué d'un pignon (3) raccordé au moteur d'entraînement (1) et d'un engrenage droit (4) qui tourne sur un arbre creux, agencé parallèlement à l'axe et à distance de l'arbre du moteur d'entraînement (1), à titre d'élément traversant central de la transmission, dans laquelle il est prévu, du côté mené du groupe à engrenages droits (5) servant d'étage de transmission préliminaire, un autre pignon agencé stationnaire et coaxial à l'engrenage droit (4),
**caractérisée en ce que** ledit autre pignon forme une roue solaire (6) d'un étage de transmission à planétaires successif, dont la couronne intérieure (9) est agencée de manière stationnaire par rapport au carter (10), et dont le porte-planétaires (11) qui tient les roues planétaires (8) fait partie de la bride menée (12) de la transmission à réduction (2), et **en ce qu'**un moteur additionnel (15) pour l'entraînement d'un moyen de vibrations est bridé et sur un côté moteur (14) de la transmission à réduction (2) à côté du moteur d'entraînement (1) qui sert d'entraînement moteur pour un cylindre à vibrations, l'arbre mené (16) du moyen de vibrations s'étendant parallèlement à l'axe à travers l'élément traversant central (7) de la transmission.

2. Transmission compacte selon la revendication 1, **caractérisée en ce que** l'engrenage droit (4) de l'étage de transmission préliminaire de la transmission à réduction (2) est réalisé en forme de plateau et est monté en rotation dans le carter (10) au moyen d'un palier à roulements (20) qui est en alignement avec la denture de l'engrenage droit (4), et dans lequel la zone radiale intérieure de l'engrenage droit (4) s'étend de façon déportée à côté du palier à roulements (20).

3. Transmission compacte selon la revendication 1, **caractérisée en ce que** le porte-planétaires (11) est réalisé, sous forme de pièce forgée, d'un seul tenant avec la bride menée (12).

4. Transmission compacte selon la revendication 3, **caractérisée en ce que** le porte-planétaires (11) est monté en rotation dans le carter (10) via un palier à rouleaux coniques (21) pour encaisser des forces radiales et axiales.

5. Transmission compacte selon la revendication 4, **caractérisée en ce que** le palier à rouleaux coniques (21) agencé sur le porte-planétaires (11) est susceptible d'être précontraint au moyen d'un écrou d'arbre (25) susceptible d'être vissé coaxialement sur le porte-planétaires (11).

6. Transmission compacte selon la revendication 1, **caractérisée en ce que** la roue solaire (6) est enfichée dans une denture radiale intérieure correspondante dans l'engrenage droit (4), pour transmettre le couple de rotation de l'étage de transmission à planétaires successif.

7. Transmission compacte selon la revendication 1, **caractérisée en ce qu'**une douille d'étanchement (23) est fermement enfichée dans la traversée centrale du porte-planétaires (11), douille qui mène à travers la roue solaire (6) de l'étage de transmission à planétaires jusqu'au côté moteur (14) de la transmission à réduction (2), pour former l'élément traversant central (7) de la transmission.

8. Transmission compacte selon l'une des revendications précédentes, **caractérisée en ce que** le carter (10) est réalisé en deux parties, dans lesquelles une partie principale de carter (18) est prévue pour loger l'étage de transmission préliminaire et l'étage de transmission à planétaires successif, et une partie formant couvercle de carter (19) est prévue pour fermer la partie principale de carter (18) sur le côté moteur (14) de la transmission à réduction (2).

9. Transmission compacte selon l'une des revendications précédentes, **caractérisée en ce que** le moteur d'entraînement (1) et/ou le moteur additionnel (15) et/sont réalisé(s) comme moteurs hydrauliques.

10. Ensemble tracteur-compacteur comprenant des cylindres à vibrations qui sont équipés chacun d'un entraînement compact selon l'une des revendications précédentes.

11. Ensemble tracteur-compacteur selon la revendication 10, **caractérisé en ce que** le pignon (3) de la transmission à réduction (2) est agencé sur un arbre commun avec un frein (13) qui, outre le remplissage d'une fonction d'arrêt, sert également d'organe de positionnement d'une régulation anti-patinage pour synchroniser l'entraînement en rotation des cylindres à vibrations.

12. Ensemble tracteur-compacteur selon la revendication 11, **caractérisé en ce que** le frein (13) est réalisé à la manière d'un frein à lamelles et est intégré dans le carter (10) à l'opposé du moteur d'entraînement (1).

13. Ensemble tracteur-compacteur selon la revendication 12, **caractérisé en ce que** le frein (13) intégré dans le carter (10) est accessible via un capot de frein (17) maintenu de façon détachable dans la partie principale de carter (18).
